# EUROPEAN PATENT SPECIFICATION

(11) **EP 3 551 670 B1**
(45) Date of publication and mention of the grant of the patent: **14.10.2020**
(21) Application number: 17804883.1
(22) Date of filing: 24.11.2017
(51) Int. Cl.: C08F 2/00, C08F 2/01, C08F 2/12, C08F 6/24, C08F 10/02, C08L 23/04

(54) **PROCESS FOR MANUFACTURING POLYETHYLENE**
VERFAHREN ZUR HERSTELLUNG VON POLYETHYLEN
PROCÉDÉ DE FABRICATION DE POLYÉTHYLÈNE

(30) Priority: 07.12.2016 EP 16202675; 28.04.2017 US 201762491326 P
(43) Date of publication of application: 16.10.2019
(73) Proprietor: SABIC Global Technologies B.V., 4612 PX Bergen op Zoom (NL)
(72) Inventor: GUZMAN-CARRAZCO, Job, Daniel, 6160 GA Geleen (NL); MILOSEVIC, Miran, 6160 GA Geleen (NL); JIJIMON, Philip, 6160 GA Geleen (NL); NAZER, Fadhel, Jamil, 6160 GA Geleen (NL)
(74) Representative: Sabic Intellectual Property Group
(86) International application number: PCT/EP2017/080368
(87) International publication number: WO 2018/104080

(56) References cited:
- EP-A1- 2 589 612

## Description

The present invention relates to a process for the manufacturing of a high density polyethylene (HDPE). In particular, the present invention relates to a process for the manufacturing of a high density polyethylene (HDPE) with a low amount of wax.

High density polyethylene (HDPE) can be produced in a two stage reactor system, where the first polymerization stage is performed in a first reactor by mixing catalyst, co-catalyst, diluent, ethylene and optionally co-monomer and hydrogen. With the catalyst and co-catalyst, which are normally of the Ziegler-Natta type, polymerization in the first reactor is performed to obtain HDPE particles having a molecular weight distribution with a relatively low weight median. The polymerization is performed in a slurry which is cooled and recycled back into the reactor.

In a second polymerization stage, the slurry from the first reactor can be fed into a second reactor, wherein the relative low median weight HDPE particles from the first stage can be grown by further polymerization according to a molecular weight distribution having a higher weight median. The further polymerization can be performed by feeding and mixing diluent, ethylene and optionally co-monomer and hydrogen to the first slurry from the first stage. The resulting HDPE particles in the second reactor slurry thus obtains a molecular weight distribution having two peaks corresponding to the first median and the second median of the respective stages in the polymerization. Thus the obtained HDPE having a two peaked molecular weight distribution is called bimodal HDPE.

Production processes for bimodal high density polyethylene (HDPE) are further summarized at pages 16-20 of "PE 100 Pipe systems" (edited by Bromstrup; second edition, ISBN 3-8027-2728-2). The production of bimodal high density polyethylene (HDPE) via a low pressure slurry process is described by Alt et al. in "Bimodal polyethylene-Interplay of catalyst and process" (Macromol.Symp. 2001, 163, 135-143).

In a third stage, post processing can be performed in a third reactor, wherein an even higher monomer conversion rate in the slurry can be obtained. Post processing is performed without feeding fresh monomers, as opposed to the first and the second polymerization stages wherein fresh monomers are fed.

In this reactor the final polymerization takes place, resulting in a conversion rate of more than 98% of the monomers used. The suspension then flows to a suspension receiver and the suspension leaving the receiver is separated in a decanter centrifuge. The separation in the decanter centrifuge generates two streams: a stream that is essentially liquid, with a small amount of solid polymer fines, and a stream that is essentially a wet solid, with residual amounts of liquid diluent.

The solid polymer stream is fed to a fluidized bed dryer.

As described in WO2010136202, in the dryer the last remaining diluent is stripped off and then recovered in a closed loop nitrogen system. The dried polymer product is HDPE powder which can be pneumatically conveyed by nitrogen to the extrusion section where it can be processed into HDPE pellets. The pellets can be further dried and pneumatically conveyed to homogenization silos.

The liquid stream is further subdivided so that part of the stream can be sent back to the second reactor, as is, and part of the liquid stream can be sent to a purification section. In the purification section, the liquid stream is heated until most of the diluent is evaporated. The diluent vapors are then sent to a distillation column to separate residual co-monomer from the diluent. Purified, i.e., wax- and (co-)monomer-free diluent is then sent back to the first reactor.

The non-evaporated, heavy bottoms of the evaporation step comprise a liquid stream containing dissolved polyethylene wax and solid polyethylene fines. This liquid stream is further evaporated to produce a waxy residue that is typically sold as a byproduct.

This waxy residue is however less valuable and it is therefore desirable for the process to produce a minimal amount of wax. The amount of wax produced depends on reactor conditions. In general, wax production increases with increasing concentrations of hydrogen and co-catalyst, as described in Quantification of polyethylene wax in semibatch laboratory reactor, J. Appl. Polym. Sci, 2013. Decreasing concentrations of hydrogen and co-catalyst decreases the amount of wax produced, but such changes in reactor conditions also influence the properties of the HDPE product.

There is therefore a need for a method to control wax production without affecting the product properties; that is, without changing the reactor conditions where the HDPE resin is produced.

It is an object of the present invention to provide a process and a system for the manufacturing of a high density polyethylene in which the above-mentioned and/or other problems are solved.

Accordingly, the invention provides a process of manufacturing high density polyethylene, comprising
- performing first polymerization to form a first slurry in a first reactor;
- transferring at least part of the first slurry from the first reactor into a second reactor;
- performing second polymerization to form a second slurry in the second reactor;
- transferring at least part of the second slurry from the second reactor to a third reactor;
- performing post processing to the second slurry to form a third slurry in the third reactor, wherein the third reactor is fed only with the second slurry for the post processing and wherein the post processing is performed at a temperature of at most 60 °C, preferably 40-60 °C, more preferably 40-50 °C, most preferably 40-45 °C and wherein the post processing is performed at a pressure of 1.3 -4.0 bar (0.3-3.0 barg).
- transferring the third slurry to a separating means;
- separating the slurry into solid polymer product and liquids in the separating means;
- transferring at least part of the liquids to a purification means and
- separating wax from said at least part of the liquids in the purification means.

The post processing in the third reactor and the first and the second polymerizations in the first and the second reactor are different in that post processing is performed without feeding fresh monomers, as opposed to the first and the second polymerizations performed while fresh monomers are fed.

The invention is based on the recognition that the post processing contributes a negligible amount to the total HDPE produced, but it produces a significant fraction of the total wax. It was therefore realized that manipulating the conditions in the third reactor while leaving other reactor conditions constant allows controlling the amount and type of wax produced, without affecting the HDPE properties such as the melt index and the density. It was found that the amount of the wax produced can be significantly decreased without affecting standard HDPE properties by performing the post processing at a low temperature of at most 60 °C. Polymerization reactions are largely suppressed along with wax generation in the third reactor at such low temperature. It was also surprisingly found that not only the amount but also the type of wax generated changes, when the conditions in the post processing are varied.

Wax can be modified after production, but it is more cost-effective to control the properties of the wax while the wax is being generated such as by the process according to the invention. Also, post-processing of the wax byproduct does not decrease the amount of wax generated in the HDPE production process.

According to the invention, the type of wax produced can be controlled by changing the conditions during the post processing in the third reactor.

It was found that the co-monomer content in the wax can be increased by reducing the pressure in the third reactor, so that the more volatile monomer (ethylene) is preferentially vented out of the system and the ratio of co-monomer to ethylene increases. Accordingly, when waxes with higher comonomer contents are desired, the post processing is performed at a pressure of at most 2 bar (1 barg), preferably at most 1.7 bar (0.7 barg), e.g. 1.3-1.7 bar (0.3-0.7 barg). Increasing the co-monomer content lowers the melting point of the wax, even below room temperature. While waxes from the slurry HDPE process are normally solid at room temperature, waxes that are liquid at room temperature can thus be produced according to the invention. Liquid waxes have potential new applications, such as lubricants or plasticizers.

A lower pressure during the post processing also results in a lower molecular weight of the wax produced.

In some embodiments, the post processing is performed at a temperature of 40-50 °C and a pressure of at most 1.3-1.7 bar (0.3-0.7 barg). This results in a very low amount of wax produced. The wax produced has a low molecular weight and a high comonomer content.

When waxes with a lower comonomer content are desired, the post processing is performed at a higher pressure, e.g. more than 2 bar (1 barg), preferably at least 2.5 bar (1.5 barg), e.g. 2.5-3.5 bar (1.5-2.5 barg).

In an embodiment, the step of performing the first polymerization in the first reactor to form a first slurry comprises feeding and mixing catalyst, co-catalyst, diluent, ethylene and optionally co-monomer and hydrogen, and cooling and recycling the first slurry.

This allows the polymerization process to start and form HDPE having a first polymer particle diameter distribution.

In a further embodiment, the step of performing the second polymerization in the second reactor to form a second slurry comprises feeding and mixing diluent, ethylene and optionally (co-)monomer and hydrogen to the first slurry, and cooling and recycling the second slurry.

This allows the further polymerization and formation of HDPE having a second polymer particle diameter distribution different from the first polymer particle diameter distribution.

The first polymerization and the second polymerization are typically performed at pressures in the range between for example from 3 bar (2 barg) to 11 bar (10 barg), and at temperatures in the range between from 75 °C to 90 °C, for example 75 °C to 88 °C.

In an embodiment, the process further comprises recycling part of the liquid from the separating means back into the second reactor and/or back into the first reactor. This allows unused monomer and co-monomer still dissolved in the recycled liquids to be processed further to form the polymer product.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by referring to the following drawings and examples, without however being limited thereto.

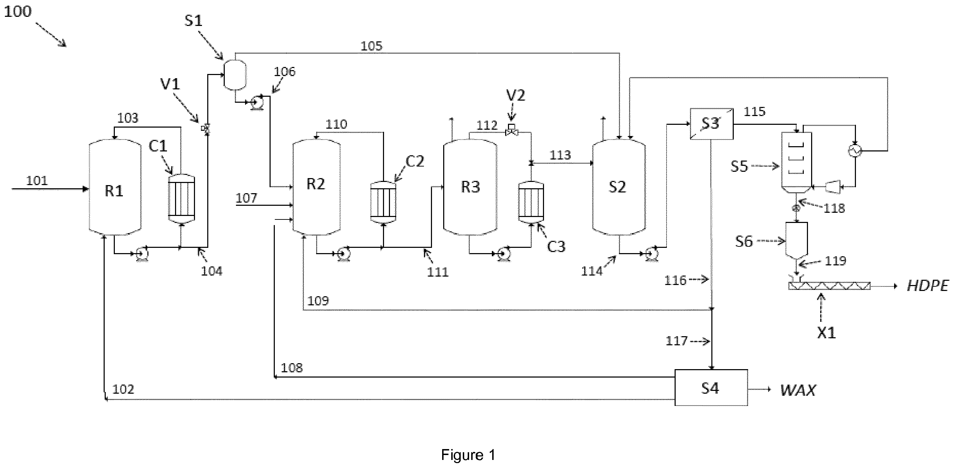

Figure 1 shows a process diagram of a process for manufacturing multimodal high density polyethylene according to an embodiment of the invention.

In Fig. 1 a two stage cascade process for the polymerization of ethylene is shown, wherein the first reactor R1 may be fed continuously with a mixture of monomers, hydrogen, Ziegler-Natta catalyst/co-catalyst and fresh diluent in an inlet 101, while purified diluent (e.g., hexane) recycled from the process is fed in another inlet 102. Heat of polymerization is removed by flowing slurry through an external cooler C1, and returning a cooled recycle stream 103 back to reactor. Product from the first reactor initial polymerization is transferred in a slurry stream 104 in a continuous process to the second reactor R2. The slurry stream 104 may flow through a flash unit S1 in order to expel gas trapped in the slurry. Gasses are removed from the top of unit S1 via stream 105, slurry is removed from the bottom of unit S1 via stream 106. In the second reactor R2 further polymerization is performed by feeding ethylene, monomer, and co-monomer in inlet 107 and recycled fluids to the reactor R2 in inlets 108 and 109.

In the first and second reactors R1 and R2, polymerization of ethylene occurs as an exothermic reaction at pressures in the range between for example from 3 bar (2 barg) to 11 bar (10 barg), and at temperatures in the range between for example from 75 °C to 88 °C. The heat from the polymerization reaction is removed by means of cooling water. The characteristics of the polyethylene are determined amongst others by the catalyst system and by the concentrations of catalyst, co-monomer and hydrogen. The polymerization efficiency of both reactors R1 and R2 may reach values of 98% or higher in terms of ethylene conversion. Co-monomer conversion is typically lower.

In the state of the art, the slurry from the second reactor R2 is transferred via slurry stream 111 to the third reactor R3 where post polymerization is performed at temperatures and pressures similar to those of R2, thus allowing for continued polymerization and ethylene conversions higher than 98%.

In this invention, the post polymerization is performed at a temperature of at most 60 °C and a pressure of 1.3-3.0 bar (0.3-2.0 barg). The relatively low R3 temperatures employed in this embodiment reduce the rate of all chemical reactions including those that generate polymer and wax (in reactor R3). It has been found that the loss of product is negligible, but the decrease in wax production is significant. Therefore, by manipulating the temperature of R3, it is possible to reduce wax production without significantly affecting the amount- or the properties- of the final polymer product.

The slurry from the third reactor R3 is transferred via stream 113 to a buffer tank S2, and from there to a decanter centrifuge S3 for the separation of liquids and solids. The buffer tank S2 may receive additional streams from other parts of the process, as shown in Fig. 1.

In the decanter centrifuge S3 the polymer product, in the form of the polymer particles formed during the polymerization process, is separated from the slurry to form a wet cake. The decanter centrifuge S3 does not remove all solid material from the liquid (at the liquid discharge point), and not all liquid from the solids stream (at the solids discharge point). The wet cake produced by S3 is a relatively concentrated mixture of polymer powder and diluent.

The wet cake exiting S3 is transferred via 115 to a drying unit S5 where the hexane diluent is further separated from the polymer particles. The hexane diluent extracted by the drying unit may be recycled to the buffer tank S2, in an attempt to remove residual polymer fines from the diluent via a second centrifugation step in S3. Polymer fines are small polymer particles that are difficult to recover in a single centrifugation step. The polymer product is discharged from the dryer S5 via 118 into a powder treatment vessel S6 where it can be post processed. The post processing may involve processing steps like adding nitrogen, or steam, necessary for obtaining specific end product characteristics.

The liquid separated from the polymer product in the decanter centrifuge S3, also referred to as mother liquor 116, contains hexane, 1-butene, co-catalyst residues, small solid particles, and other dissolved species. The small solid particles consist of polymeric and non-polymeric material. The polymeric material may have properties equal to the polymer powder, or it may be material with a different molecular weight and/or with a different co-monomer concentration that allows this material to precipitate at a given process temperature downstream of the decanters. The non-polymeric material consists of inorganic solids, such as aluminum oxides and other co-catalyst and catalyst residues.

Part of the mother liquor stream 116 can be recycled back to reactor R2, via stream 109, while the rest of the mother liquor (stream 117) is transferred to a purification unit S4. The purification unit S4 generates three streams. The first stream, stream 102 is purified diluent, essentially free of co-monomer, and free of wax. The second stream, stream 108 is diluent that is free of wax, but that still contains co-monomer. The third stream is polyethylene wax, containing small amounts of polymer fines, small amounts of inorganic solids, and traces of diluent.

### KEY REFERENCE NUMERALS

- R1: initial polymerization reactor
- R2: polymerization reactor
- R3: post polymerization reactor
- S1: flash vessel
- S2: decanter buffer
- S3: decanter centrifuge
- S4: purification unit
- S5: dryer
- S6: powder treatment vessel

### EXAMPLES

### Example 1

HDPE was produced in Plant A with catalyst A for a period of nearly four years using the system illustrated in Figure 1. During the entire production time (excluding startups and shutdowns), the first reactor (R1) was maintained at a temperature of 88 °C (+/- 1 °C), and a pressure of 10 bar (+/- 1 bar) (9 barg (+/-1 barg)). Similarly, the second reactor (R2) was maintained (during the entire production time) at a pressure of 5 bar (+/- 1 bar) (4 barg (+/- 1 barg)), and a temperature ranging from 78 to 84 °C, depending on the characteristics of the product grade being manufactured. Different polymer grades for different commercial applications were produced during this period of time.

While the conditions of the first and second reactor were maintained, the conditions of the third reactor R3 were varied. During the first period of the experiment, the temperature of R3 was maintained at 78 °C (+/- 2 °C), and the pressure of R3 was maintained at 3 bar (+/- 1 bar) (2 barg (+/- 1 barg)).

During the second period of the experiment, the temperature of R3 was maintained at 46 °C (+/- 2 °C), and the pressure of R3 was maintained at 1.5 bar (+/- 0.1 bar) (0.5 barg (+/- 0.1 barg)).

The amount of wax produced during the second period was lower and more stable than the corresponding values of wax production during the first period, confirming that changes in R3 conditions play a significant role in wax production. The average wax production value during the second period was 13 kg Wax/ton HDPE. This represents a 45% decrease from the average wax production of the first period, which stood at 24 kg Wax/ton HDPE.

### Example 2

HDPE suitable for pipe manufacturing applications was produced in Plant B with catalyst B. The process of Plant B (as well as that of Plant A) is illustrated in Figure 1.

During the entire production time of this particular polymer grade (excluding startups, shutdowns, and the manufacturing of other grades), the first reactor (R1) was maintained at a temperature of 84 °C (+/- 1 °C) and a pressure of 9.5 bar (+/- 0.5 bar) (8.5 barg (+/- 0.5 barg)). Similarly, the second reactor (R2) was maintained (during the entire production time) at a temperature of 82 °C (+/- 2 °C) and at a pressure of 4.5 bar (+/- 0.5 bar) (3.5 barg (+/- 0.5 barg)). The composition in both reactors (R1 and R2) was also maintained at constant values.

While the conditions of the first and second reactor were maintained, the conditions of the third reactor R3 were varied. During the first period, the temperature of R3 was maintained at 80 °C (+/- 2 °C), and the pressure of R3 was maintained at 2.5 bar (+/- 0.5 bar) (1.5 barg (+/- 0.5 barg)). During the second period, the temperature of R3 was maintained at 60 °C (+/- 1 °C), and the pressure of R3 was maintained at 1.5 bar (+/- 0.1 bar) (0.5 barg (+/- 0.1 barg)). During the third period, the temperature of R3 was maintained at a temperature of 55 °C (+/- 1 °C), while the pressure of R3 was maintained at 1.4 bar (+/- 0.1 bar) (0.4 barg (+/- 0.1 barg)).

Table 1 indicates the amount of wax produced, in kg of wax per metric ton of HDPE, for the different R3 conditions employed in the study. Wax production decreased with decreasing R3 temperature and pressures, achieving a 20% decrease from standard conditions, at 55 °C and 1.4 bar (0.4 barg). Polymer product properties, such as density and melt index remain unchanged. It can be understood that reduced pressures contribute to the decrease in wax production by inducing the evaporation of reactive components such as ethylene, which would otherwise be available in higher concentrations for wax-formation reactions.

**Table 1**

| **Period** | **Wax per MT PE [Kg]** | **R3 Temp [°C]** | **R3 Pressure [bar] ([barg])** |
|---|---|---|---|
| 1 | 15 | 80 | 2.5 (1.5) |
| 2 | 14 | 60 | 1.5 (0.5) |
| 3 | 12 | 55 | 1.4 (0.4) |

### Example 3

HDPE material suitable for film manufacturing applications was produced in Plant B using catalyst C. The process of Plant B is illustrated in Figure 1.

All the catalysts used in the examples, catalyst A, B, and C are of the Ziegler Natta type. For all three catalysts, wax production is reduced when R3 temperatures and pressures are decreased, but the amount of wax reduction varies depending on the catalyst.

Different grades of HDPE are produced by varying the conditions in reactors R1 and R2, specifically by varying reactant concentrations, by modifying temperatures and pressures, and by changing the catalyst. Film grades of HDPE (Example 3) differ from Pipe grades (Example 2) in several features; for instance, more hydrogen is introduced in the reactors during the manufacturing of film grades than during the manufacturing of pipe grades. The additional hydrogen results in film products having a lower molecular weight than pipe products. Wax from film grades also have a lower molecular weight than wax made during the production of pipe grades.

During the production of film grades (excluding startups and shutdowns), the first reactor (R1) was maintained at a temperature of 82 °C (+/- 1 °C), and a pressure of 10 bar (+/- 0.5 bar) (9 barg (+/- 0.5 barg)). Similarly, the second reactor (R2) was maintained (during the entire production time) at a temperature of 81 °C (+/- 1 °C) and at a pressure of 3.8 bar (+/- 0.2 bar) (2.8 barg (+/- 0.2 barg)). The composition in both reactors (R1 and R2) was also maintained at constant values.

While the conditions of the first and second reactor were maintained, the conditions of the third reactor R3 were varied. Two cases were studied. In Case A, the temperature of R3 was maintained at 80 °C (+/- 2 °C), and the pressure of R3 was maintained at 2.5 bar (+/- 0.5 bar) (1.5 barg (+/- 0.5 barg)). In Case B, the temperature of R3 was maintained at 55 °C (+/- 1 °C), and the pressure of R3 was maintained at 1.4 bar (+/- 0.1 bar) (0.4 barg (+/- 0.1 barg)).

Table 2 summarizes the properties of the wax obtained in each case. The wax of Case B (lower temperatures and pressures) has a lower molecular weight than the wax of Case A (higher temperatures and pressures). All molecular weight averages, the number-average molecular weights (Mn), the weight average molecular weight (Mw), and the z-average molecular weight (Mz) have lower values in Case B than they do in Case A. Polydispersity indexes (Mw/Mn, and Mz/Mw) are also lower in Case B. The intrinsic viscosity, which also depends on molecular weight, is consistently lower for Case B.

Moreover, the melting point of the wax is lower for Case B. The decrease in the melting point is caused partly by the decrease in molecular weight, and partly by the change in the wax molecular composition. As shown in Table 2, the wax in Case B contains twice the amount of 1-butene than the wax in Case A. The enrichment in the co-monomer, 1-butene, shows that wax composition can be manipulated by changing the conditions in reactor R3. Specifically, lower pressures enrich the gas phase composition in the lowest volatiles component, increasing the availability of 1-butene over ethylene, and resulting in wax containing more 1-butene. In combination with the lower molecular weight, the high 1-butene content result is a new type HDPE wax, nearly liquid at ambient temperatures.

Molecular weights were measured by size-exclusion chromatography (SEC). Melting points were measured by differential scanning calorimetry (DSC). And 1-butene content was determined by nuclear magnetic resonance (NMR). More details on each measurement technique are given below.

**Table 2**

| **CASE** | **A** | **B** |
|---|---|---|
| R3 Pressure, bar (barg) | 2.5 (1.5) | 1.4 (0.4) |
| R3 Temperature, °C | 80 | 55 |
| Mₙ, kg/mol | 0.3 | 0.2 |
| M_{w}, kg/mol | 0.7 | 0.3 |
| M_{z}, kg/mol | 47 | 1.3 |
| M_{w}/Mₙ | 2.3 | 1.5 |
| M_{z}/M_{w} | 67 | 4.3 |
| [η], dL/g | 0.04 | 0.02 |
| Melting Point, °C | 70 | 43 |
| 1-butene content, wt% | 0.5 | 1.1 |
| kg Wax/ton HDPE | 12.3 | 10.6 |

### Size exclusion chromatography

- Method: IAV Molecular Characterization
- Chromatography: Polymer Laboratories PL-GPC220
- Detection: Polymer Laboratories PL BV-400 viscometer; Refractive index detector, Polymer Char IR5 infrared detector as concentration detector.
- Column set: three Polymer Laboratories 13 µm PLgel Olexis, 300 x 7.5 mm
- PE molar mass calibration was performed with linear PE standards in the range of 0.5 - 2800 kg/mol.

### Differential scanning calorimetry

### Mettler device

- Temperature program : -100...200°C @ 10°C/min
- Purge flow : 50 ml/min Nitrogen

The reported values corresponds to the initial melting point after annealing.

### Nuclear magnetic resonance

The samples were dissolved at 130°C in C2D2CI4 containing DBPC as stabilizer. The 1 H NMR spectra was recorded on a Bruker Avance 500 NMR spectrometer equipped with a 5mm cryogenically cooled probe head operating at 125°C.

## Claims

1. A process for the manufacturing of high density polyethylene, comprising
• performing first polymerization to form a first slurry in a first reactor (R1);
• transferring (104) at least part of the first slurry from the first reactor (R1) into a second reactor (R2);
• performing second polymerization to form a second slurry in the second reactor (R2);
• transferring (111) at least part of the second slurry from the second reactor (R2) to a third reactor (R3);
• performing post processing to the second slurry to form a third slurry in the third reactor (R3), wherein the third reactor is fed only with the second slurry for the post processing and wherein the post processing is performed at a temperature of at most 60 °C, preferably 40-60 °C, more preferably 40-50 °C, most preferably 40-45 °C and wherein the post processing is performed at a pressure of 1.3 -4.0 bar (0.3-3.0 barg):
• transferring the third slurry to a separating means (S3);
• separating the slurry into solid polymer product and liquids in the separating means (S3);
• transferring (117) at least part of the liquids to a purification means (S4) and
• separating wax from said at least part of the liquids in the purification means (S4).

2. The process according to claim 1, wherein the post processing is performed at a pressure of at most 2 bar (1 barg), for example 1.3-1.7 bar (0.3-0.7 barg).

3. The process according to claim 1, wherein the post processing is performed at a pressure of more than 2 bar (1 barg), for example 2.5-3.5 bar (1.5-2.5 barg).

4. The process according to any one of the preceding claims, wherein the step of performing the first polymerization in the first reactor to form a first slurry comprises feeding and mixing catalyst, co-catalyst, diluent, ethylene and optionally co-monomer and hydrogen, and cooling and recycling the first slurry.

5. The process according to any one of the preceding claims, wherein the step of performing the second polymerization in the second reactor to form a second slurry comprises feeding and mixing diluent, ethylene and optionally (co-)monomer and hydrogen to the first slurry, and cooling and recycling the second slurry.

6. The process according to any one of the preceding claims, wherein the first polymerization and the second polymerization are performed at a pressure of 3 bar (2 barg) to 11 bar (10 barg) and at a temperature of 75 °C to 90 °C.

7. The process according to any one of the preceding claims, wherein the process further comprises recycling (109) part of the liquid from the separating means into the first and/or second reactor.

## Patentansprüche

1. Verfahren zur Herstellung von Polyethylen hoher Dichte, das Folgendes umfasst:
• Durchführen einer ersten Polymerisation zur Bildung einer ersten Aufschlämmung in einem ersten Reaktor (R1);
• Überführen (104) mindestens eines Teils der ersten Aufschlämmung aus dem ersten Reaktor (R1) in einen zweiten Reaktor (R2);
• Durchführen einer zweiten Polymerisation zur Bildung einer zweiten Aufschlämmung in dem zweiten Reaktor (R2);
• Überführen (111) mindestens eines Teils der zweiten Aufschlämmung aus dem zweiten Reaktor (R2) in einen dritten Reaktor (R3);
• Durchführen einer Nachverarbeitung der zweiten Aufschlämmung zur Bildung einer dritten Aufschlämmung in dem dritten Reaktor (R3), wobei der dritte Reaktor für die Nachverarbeitung nur mit der zweiten Aufschlämmung gespeist wird und wobei die Nachverarbeitung bei einer Temperatur von höchstens 60 °C, vorzugsweise 40-60 °C, weiter bevorzugt 40-50 °C und bevorzugt 40-45 °C durchgeführt wird und wobei die Nachverarbeitung bei einem Druck von 1,3-4,0 bar (0,3-3,0 barg) durchgeführt wird;
• Überführen der dritten Aufschlämmung in eine Trenneinrichtung (S3);
• Trennen der Aufschlämmung in festes Polymerprodukt und Flüssigkeiten in der Trenneinrichtung (S3);
• Überführen (117) von mindestens einem Teil der Flüssigkeiten in eine Reinigungseinrichtung (S4) und
• Abtrennen von Wachs von mindestens einem Teil der Flüssigkeiten in der Reinigungseinrichtung (S4) .

2. Verfahren nach Anspruch 1, wobei die Nachverarbeitung bei einem Druck von höchstens 2 bar (1 barg), beispielsweise 1,3-1,7 bar (0,3-0,7 barg) durchgeführt wird.

3. Verfahren nach Anspruch 1, wobei die Nachverarbeitung bei einem Druck von mehr als 2 bar (1 barg), beispielsweise 2,5-3,5 bar (1,5-2,5 barg), durchgeführt wird.

4. Verfahren nach einem der vorhergehenden Ansprüche, wobei der Schritt der Durchführung der ersten Polymerisation in dem ersten Reaktor zur Bildung einer ersten Aufschlämmung das Einspeisen und Mischen von Katalysator, Cokatalysator, Verdünnungsmittel, Ethylen und gegebenenfalls Comonomer und Wasserstoff und das Abkühlen und Rezyklieren der ersten Aufschlämmung umfasst.

5. Verfahren nach einem der vorhergehenden Ansprüche, wobei der Schritt der Durchführung der zweiten Polymerisation in dem zweiten Reaktor zur Bildung einer zweiten Aufschlämmung das Einspeisen und Mischen von Verdünnungsmittel, Ethylen und gegebenenfalls Comonomer und Wasserstoff zu der ersten Aufschlämmung und das Abkühlen und Rezyklieren der zweiten Aufschlämmung umfasst.

6. Verfahren nach einem der vorhergehenden Ansprüche, wobei die erste Polymerisation und die zweite Polymerisation bei einem Druck von 3 bar (2 barg) bis 11 bar (10 barg) und bei einer Temperatur von 75 °C bis 90 °C durchgeführt werden.

7. Verfahren nach einem der vorhergehenden Ansprüche, wobei das Verfahren ferner das Rezyklieren (109) eines Teils der Flüssigkeit aus der Trenneinrichtung in den ersten und/oder zweiten Reaktor umfasst.

## Revendications

1. Procédé de fabrication de polyéthylène de haute densité, comprenant :
• la réalisation d'une première polymérisation pour former une première suspension dans un premier réacteur (R1) ;
• le transfert (104) d'au moins une partie de la première suspension du premier réacteur (R1) à un deuxième réacteur (R2) ;
• la réalisation d'une deuxième polymérisation pour former une deuxième suspension dans le deuxième réacteur (R2) ;
• le transfert (111) d'au moins une partie de la deuxième suspension du deuxième réacteur (R2) à un troisième réacteur (R3) ;
• le fait de soumettre la deuxième suspension à un post-traitement pour former une troisième suspension dans le troisième réacteur (R3), le troisième réacteur recevant seulement la deuxième suspension pour le post-traitement et le post-traitement étant réalisé à une température maximale de 60 °C, préférablement de 40 à 60 °C, plus préférablement de 40 à 50 °C, idéalement de 40 à 45 °C et le post-traitement étant réalisé à une pression de 1,3 à 4,0 bars (0,3 à 3,0 barg) ;
• le transfert de la troisième suspension à un moyen de séparation (S3) ;
• la séparation de la suspension en un produit polymère solide et en liquides dans le moyen de séparation (S3) ;
• le transfert (117) d'au moins une partie des liquides à un moyen de purification (S4) ; et
• la séparation de la cire de ladite au moins une partie des liquides dans le moyen de purification (S4).

2. Procédé selon la revendication 1, dans lequel le post-traitement est réalisé à une pression d'au maximum 2 bars (1 barg), par exemple de 1,3 à 1,7 bar (0,3 à 0,7 barg).

3. Procédé selon la revendication 1, dans lequel le post-traitement est réalisé à une pression supérieure à 2 bars (1 barg), par exemple de 2,5 à 3,5 bars (1,5 à 2,5 barg).

4. Procédé selon l'une quelconque des revendications précédentes, dans lequel l'étape de réalisation de la première polymérisation dans le premier réacteur pour former une première suspension comprend l'introduction et le mélange d'un catalyseur, d'un cocatalyseur, d'un diluant, d'éthylène et éventuellement d'un comonomère et d'hydrogène, et le refroidissement et le recyclage de la première suspension.

5. Procédé selon l'une quelconque des revendications précédentes, dans lequel l'étape de réalisation de la deuxième polymérisation dans le deuxième réacteur pour former une deuxième suspension comprend l'introduction et le mélange d'un diluant, d'éthylène et optionnellement d'un (co)monomère et d'hydrogène dans la première suspension, et le refroidissement et le recyclage de la deuxième suspension.

6. Procédé selon l'une quelconque des revendications précédentes, dans lequel la première polymérisation et la deuxième polymérisation sont réalisées à une pression de 3 bars (2 barg) à 11 bars (10 barg) et à une température de 75 °C à 90 °C.

7. Procédé selon l'une quelconque des revendications précédentes, le procédé comprenant en outre le recyclage (109) d'une partie du liquide provenant du moyen de séparation vers le premier et/ou le deuxième réacteur.
